# EUROPEAN PATENT APPLICATION

(11) **EP 4 495 872 A1**
(43) Date of publication of application: **22.01.2025**
(21) Application number: 23749924.9
(22) Date of filing: 26.01.2023
(51) Int. Cl.: G06Q 50/16, G06Q 50/18, G06Q 20/36, G06Q 30/06, G06Q 30/08, H04L 67/104, G06F 21/64, H04L 9/00

(54) **SYSTEM FOR SPECIFYING AND TRADING AIR RIGHTS USING NON-FUNGIBLE DIGITAL TOKENS**

(30) Priority: 04.02.2022 KR 20220014502
(71) Applicant: Kang, Sungwoon, Busan 480-62 (KR)
(72) Inventor: Kang, Sungwoon, Busan 480-62 (KR)
(74) Representative: Herrero & Asociados, S.L.
(86) International application number: PCT/KR2023/001160
(87) International publication number: WO 2023/149691

(57) **Abstract**

The present invention relates to a system for specifying and trading air rights using non-fungible digital tokens, the system comprising: headquarters for controlling the system; an air rights trading marketplace in which air rights issued as non-fungible digital tokens through a network are specified and air rights trading is carried out according to air rights registration information, air rights height restriction information, and agreed-upon transaction conditions; an operation unit for mediating the input and output of information; buyers, sellers, intermediaries, and authorities who access the air rights trading marketplace through the operation unit and possess respective electronic wallets; and distributed storage in which the originals of all air rights information set for specification are distributed outside the headquarters via the network and stored in an air rights registration table, and air rights height restriction table.

## Description

### [Technical Field]

The present invention relates to a system of specifying and trading air rights, which supports the activation of air rights trading for specifying and trading air rights of the airspace above land owned by a landowner by giving exclusivity and credibility to air rights using non-fungible digital tokens.

### [Background Art]

The land owned by the landowner is recognized as an asset that can be traded, and air rights result in trading value due to shortages and surpluses by setting a virtual upper limit on the airspace of the land, an example of which is carbon emission rights trading.

In addition, with the increase in the demand for funding due to downtown capacity and height management, aging structure remodeling, and reconstruction, as well as the legal demand for adjusting rights such as view rights and sunlight rights, specifying and valuing air rights are important, but it is currently challenging to solve using existing technology.

Furthermore, while land ownership rights are constantly specified in the land register, air rights face issues that arise specifications from setting according to changes in rights, and the existing land register system only recognizes presumptive power regarding ownership rights and does not recognize public credibility, therefore, methods granting exclusivity and public credibility for changes in real rights are required to activate air rights trading.

Moreover, as mobility technology advances, a system that constantly specifies air rights settings and supports smooth trading for setting urban air mobility routes and evasions, as well as for adjusting and transferring responsibilities in case of legal disputes, is required.

### [Disclosure]

### [Technical Problem]

The object of the present disclosure to provide exclusivity and credibility to air rights by allowing activation of trading by explicitly always specifying the setting of air rights with a non-fungible digital token in order to improve the limitations of existing technology.

Another object of the present disclosure is to enable integrated trading by encompassing not only the inherent concept of air rights transferring unused space on the upper part of land but also the expanded concept of transferable development rights leasing unused development rights from one side to another as means of the above.

Another object of the present disclosure is to prevent innocent victims by securing the safety of trading and to supply additional liquidity to the existing real estate market by enabling fractional trading of air rights as a means of the above.

Another object of the present disclosure is to improve market trading value because of artificial shortages or surpluses by allowing the height setting of air rights depending on differentially applied regulations or the needs of owners as means of the above.

### [Technical Solution]

In order to achieve the above object and solve the problems of traditional technology, the present disclosure related to an air rights specification and trading system using a non-fungible digital token comprises: a headquarters controlling the system; an air rights trading marketplace where the air rights trading is execut ed according to registration information of surpluses air rights, height restriction information of air rights and desired transaction conditions, wherein the air rights are specified by non-fungible digital tokens issued through the network; an operation unit mediating the input and output of information; buyers, sellers, intermediaries, and authorities accessing the air rights trading marketplace through the operation unit with their respective electronic wallets; and a distributed storage storing originals of all air rights information set for specification of air rights distributed through the network outside the headquarters to an air rights registration table, an air rights height restriction table, and a transaction condition table.

The headquarters, forming one aspect of the present invention, comprises: a main server in which installed member information database and map information database; an operation unit; a verification unit validating the availability of information recorded in the main server through the operation unit; and a blockchain server in which installed air rights database consisting of an air rights registration table with general information of air rights setting for specification, a height restriction table of air rights, and a transaction condition table.

The member information database, forming another aspect of the present invention, consists of a registered member table, and the map information database consists of map information and a height restriction information table allowing input of the height setting of air rights according to differentially applied regulations or owner's needs.

### [Advantageous Effect]

According to the present invention, the present invention is proposed to improve the prior art as described above, and the exclusivity is provided with a non-fungible digital token to constantly specify the rights related to airspace, thereby overcoming differences in legal interpretation and enabling integrated trading of air rights, as well as allowing fractional trading and fractional leasing.

Furthermore, according to the present invention, by distributed storing the originals of all air rights information set through the network, credibility can be granted, forgery and falsification can be blocked, innocent victims due to the double transfer of rights can be fundamentally prevented, and, additionally, it is possible to automatically pay taxes to the government immediately upon contract conclusion.

Moreover, according to the present invention, by allowing input the height setting of air rights according to differentially applied development regulations or owner's needs, it is possible to enhance trading value in the market due to artificial shortages and surpluses.

### [Description of Drawings]

FIG. 1 illustrates a conceptual diagram of an air rights specification and trading system based on digital tokens related to the present invention.
FIG. 2 shows three-dimensional rights that a landowner has on the upper and lower spaces of the land.
FIG. 3 is drawn to distinguish between the inherent air rights representing the transfer of the ownership of unused spaces and the transfer of development rights representing the lease of unused development rights.
FIG. 4 shows an embodiment of the air rights specification and trading for adjusting private rights, including view rights and daylight rights, according to the present invention.

### [Best Mode for Invention]

Hereinafter, the present disclosure will be described in detail with reference to examples. However, the following examples are for illustrative purposes only and are not intended to limit the scope of the present invention. The same reference numerals in each drawing indicate the same parts.

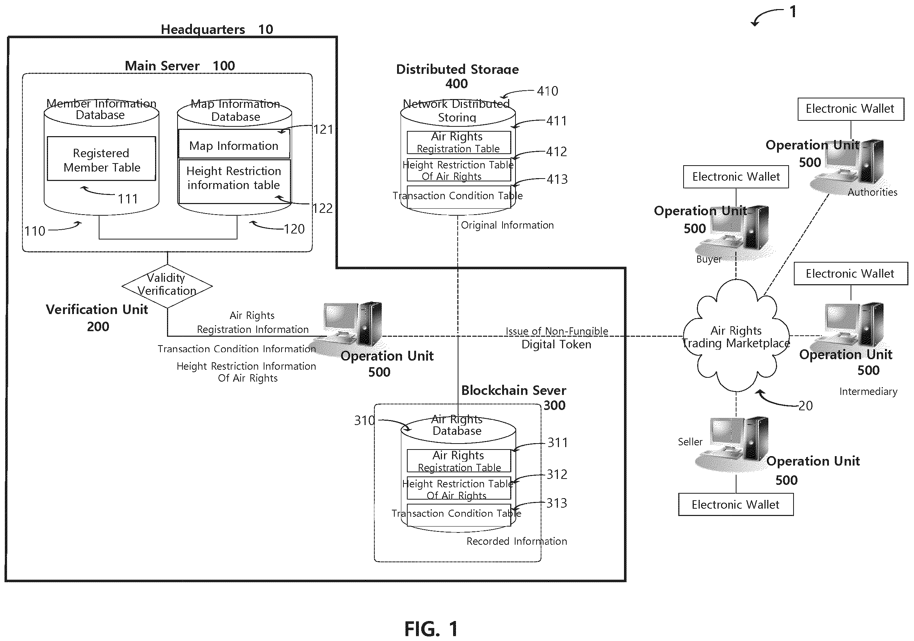

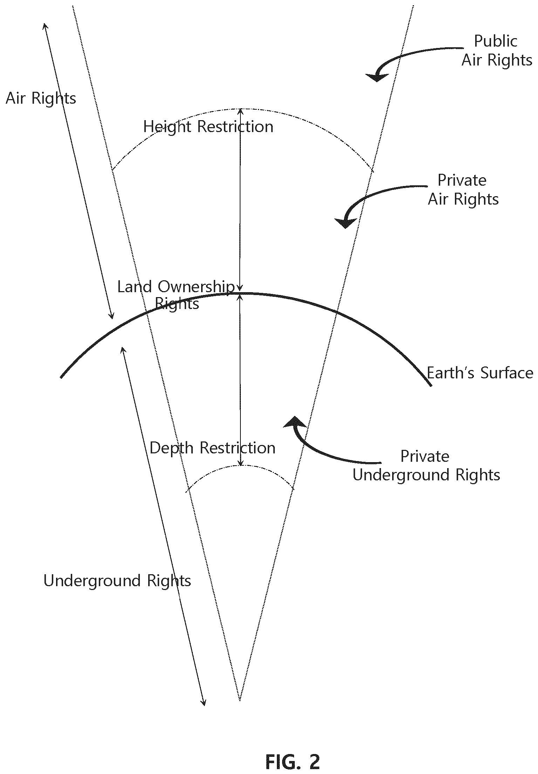

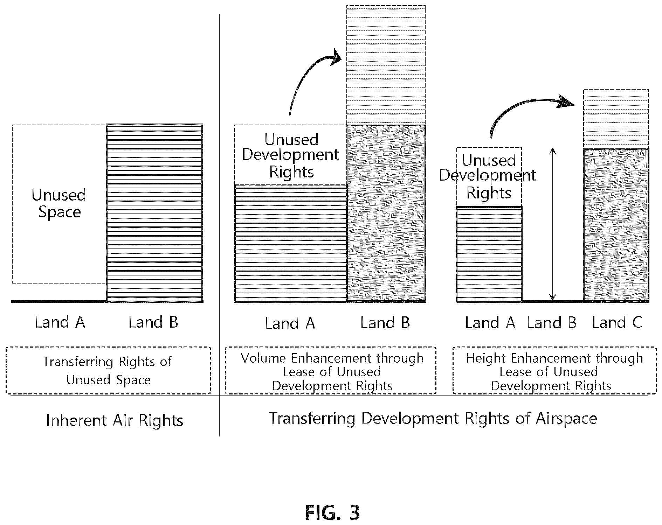

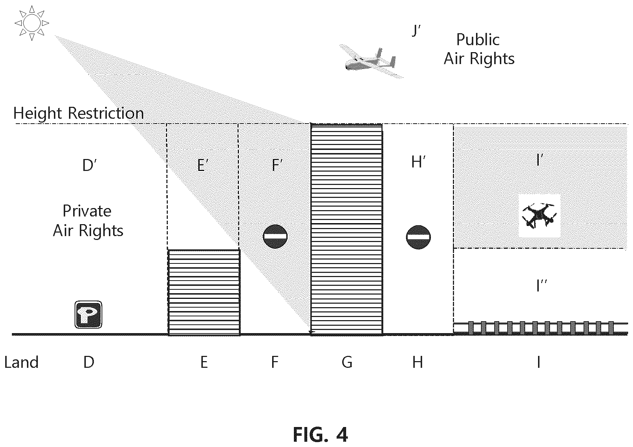

FIG. 1 shows a conceptual diagram of an air rights specification and trading system using digital tokens related to the present invention, FIG. 2 shows three-dimensional rights that the ownership of a land owner exerts on the upper and lower spaces of the land, FIG. 3 is shown to distinguish between the inherent air rights representing the ownership transfer of unused spaces and the transfer of development rights representing the lease of unused development rights, and FIG. 4 shows an embodiment of the air rights specification and trading for adjusting private rights including view rights and daylight rights according to the present invention.

The air rights specification and trading system (1) by a non-fungible digital token, according to the present invention, includes a main server (100), a verification unit (200), a blockchain server (300), an operation unit (500) inside the headquarters (10), a distributed storage (400) outside the headquarters (10), an air rights trading marketplace (20), an operation unit (500) supporting member's input and output of information, and a buyer, a seller, an intermediary, and authorities who have a unique electronic wallet. The air rights specification and trading system (1) by a non-fungible digital token, according to the present invention, records general information of the air rights set in the headquarters (10) to the blockchain server (300) and grants credibility by distributing and storing the recorded originals of all air rights information set through the distributed storage (400) via the network, and is able to activate the trade by granting exclusivity through the creation of a non-fungible digital token. The air rights referred to here means the rights to the space that exists in the airspace above the land owned by the owner, where the owner's legitimate exercise of rights is recognized, and that it means the exclusive right to be leased or transferred for the range and period of the air rights set by the performance of a contract stipulated in the digital token.

The main server (100), which forms one aspect of the headquarters (10), registers members by recording the information of the members to a registered member table (111) in the member information database (110) when buyers, sellers, intermediaries, and authorities apply for membership registration after entering unique information through the air rights marketplace via the network, and each member creates an electronic wallet for deposit and withdrawal of payment according to a predetermined procedure.

The map information database (120), forming one aspect of the main server (100), provides map information for the specification of air rights and range of air rights to members and displays the output image of map information (121) installed in the map information database (120) to the display device attached to each member's operation unit (500). The map information database (120) may need to construct a map server separately due to overload in case of excessive display information with an increase in members. In this case, the current method of constructing the map information database (120) within the main server (100), a method of constructing a separate map server outside the main server (100) but within the headquarters (10), or a method of utilizing map information services provided by map specialist companies via the network can be all considered.

The height restriction information table (122), forming one aspect of the map information database (120), allows recording of the height setting of air rights according to differentially applied development regulations or owner's needs. As shown in FIG. 2, if there are no regulations regarding height or volume, the air rights are considered to be limited to the private air rights existing under the public air rights without recording in the height restriction information table (122).

The verification unit (200) forming one aspect of the headquarters (10) is installed in order to improve the reliability of the air rights trading marketplace (20) as a means of preventing false sale listings and promoting social welfare by verifying the information validity of the registration information of the air rights, the height restriction information of the air rights, and transaction condition information, which are set by the input of a member through the operation unit (500). In case of verification failure, the verification unit notifies the member of this verification failure and requests correction or cancellation of the input information.

The blockchain server (300), forming one aspect of the headquarters (10), systematically records information authorized through the verification unit (200) in the air rights registration table (311), the height restriction information table (312), and the transaction conditions table (313) which are inside of the air rights database (310).

The distributed storage (400) forming one aspect of the present invention grants credibility to the specified air rights and enables integrated trades despite legal differences between the transfer of unused airspace and the leasing of unused development rights by distributing and storing the originals of all air rights information set authorized through the verification unit (200) via the network. FIG. 3 shows the legal differences between the inherent air rights that transfer the unused space above the land surface and the transfer of development rights that lease unused development rights. This is one of the main concepts of the present invention that constitutes the overall integrated advancement through overcoming legal differences that were difficult to implement with conventional technology rather than a simple combination of blockchain technology.

The operation unit (500) inside the headquarters (10), forming one aspect of the present invention, comprises a display device that outputs general information in images, an operation processing unit and an input device. Also, the operation unit (500) outside the headquarters (10), forming another aspect of the present invention, mediates information input/output between the headquarters (10) and buyers, sellers, intermediaries, and the authorities who have their own electronic wallets through the air rights trading marketplace (20) and the operation unit (500) outside the headquarters (10) can be replaced with portable devices equipped with all devices and units described above and network connectivity. In particular, the intermediaries are one of the key parts for the activation of the air rights specification and trading system (1) using non-fungible digital tokens related to the present invention and may have the advantage of immediately depositing the agreed fees of the non-fungible digital tokens into the intermediary's electronic wallet upon the occurrence of trading by attracting the setting and specification of landowner's air rights. Furthermore, specified taxes within the non-fungible digital tokens are deposited immediately into the government's electronic wallet upon the occurrence of trading.

The air rights trading marketplace (20), forming one aspect of the present invention, specifies the air rights generated by the non-fungible digital token in the headquarters (10) via the networks and conducts integrated trading of the air rights by the transaction conditions.

### [Mode for Invention]

For one example of air rights trading, FIG. 4 shows a detailed example of the air rights specification and trading according to the present invention for the adjustment of private rights, including view rights and daylight rights. In the case where owners of land G with high-rise structures above the land G wish to prevent expected infringements on view rights or daylight rights in the future as a property means, owners of land G can post their intention to buy air rights E' for owners of land E on the air rights trading marketplace (20).

As another example, for the financing of remodeling, all the owners of land E agree with a single-member registration, post a sales order for air rights E' in the air rights trading marketplace (20), and settle the contract immediately through an electronic wallet according to the contract conditions. Ownership change information and transaction history are updated in the blockchain server (300) and are simultaneously updated in the distributed storage (400) to give credibility.

For another example, if the owner of land F engaging in agriculture wishes to effectively utilize unused airspace through the trading of air rights F', the owner of land F posts the intention to sell the air rights F' on the air rights trading marketplace (20), then landowners of land G can secure daylight rights and view rights, and even prevent violations of portrait rights and privacy as property means through buying the posted air rights F'. In this case, changing the setting information of the acquired air rights F' to a no-fly status would suffice, which, if the setting heights of air rights F' is modified to 0m on the height restriction information table (122), can be reflected in the map information (121) for other members to look up about the purpose. If unauthorized aerial vehicles intentionally intrude into the air rights F' area, the owner of the air rights F' can obtain legal benefits by sanctioning them as property means due to illegal occupancy, and by additionally acquiring air rights H', the owner of the air rights can expect even more perfect legal benefits.

For another example, if a logistics operation unit using aerial vehicles wishes to establish an aerial delivery route in the unused airspace above the railway tracks located on land I owned by the railway administration, the logistics operation unit using aerial vehicles can secure a dedicated aerial delivery route by purchasing the air rights I' and the railway administration secures additional financial resources through trading of unused space. If the Railway Administration plans to install structures on the unused airspace of air rights I" located below the airspace of air rights I' through selling the air rights I", they can similarly sell the air rights I" through a competitive bidding process via the air rights trading marketplace (20) after setting the details accordingly.

In another example, when the government plans to set flight paths for passenger transportation aerial vehicles in urban areas, the government can achieve the policy goal by updating height setting information in the height restriction information table (122) after specifying the government's ownership of air rights J' that does not infringe on the legitimate air rights of land D, land E, land F, land G, and land H owners. With this method, the government can avoid unilateral regulations like existing height restrictions and, effectively regulate urban development activities, and promote balanced land development by actively acquiring or specifying ownership of air rights through property means rather than regulation.

## Claims

1. An air rights specification and trading system (1) using a non-fungible digital token, the system comprising:
a main server (100) comprises a member information database (110) and a map information database (120);
a verification unit (200) to verify the validity of information from the main server (100);
a blockchain server (300) to record air rights registration information, height restriction information of an air rights, and transaction condition information verified by the verification unit (200);
an air rights trading marketplace (20) to specify and trade the unique air rights issued as non-fungible digital tokens in the system via the networks; and,
an operation unit (500) comprsing a display device that outputs images general information of the air rights and information related to trading, an operation processing unit, and an input device,
wherein the member information database (110) comprises a registered member table (111) systematically recording registered members' lists and unique information, and wherein the blockchain server (300) comprises an air rights database (310) comprising an air rights registration table (311), a height restriction table (312) of the air rights, and a transaction condition table (313) that systematically records information verified by the verification unit (200) by item.

2. The system of claim 1, the air rights specification and trading system (1) using a non-fungible digital token further comprising:
a distributed storage (400) to distribute and store outside of headquarters (10) via the networks originals of all air rights information set of the air rights registration information, the height restriction information of the air rights, and the transaction condition information which informations are verified by the verification unit (200) and recorded in the blockchain server (300), via the networks; and,
buyers, sellers, intermediaries, and authorities who have their own unique electronic wallets and are connected to the unique air rights issued as non-fungible digital token based on information by item shared by the blockchain server (300) and the distributed storage (400) through an air rights trading marketplace (20) and each operation unit (500) via the networks,
wherein the distributed storage (400) comprises an air rights registration table (411), height restriction table (412) of the air rights, and a transaction condition table (413) those systematically record originals of all air rights information set recorded in the air rights database (310) by item via the networks.

3. The system of claim 1, wherein the map information database (120) comprises a map information (121) and a height restriction information table (122) that are displayed as an image through the display device attached to the operation unit (500),
wherein the height restriction information table (122) systematically records the height setting of air rights to efficiently improve market trading value of the air rights because of regional shortages or surpluses by existing regulations of spaces with the air rights of landowners or designating the required specific range of air rights.
